# EUROPÄISCHE PATENTSCHRIFT

(11) **EP 1 984 210 B1**
(45) Veröffentlichungstag und Bekanntmachung des Hinweises auf die Patenterteilung: **18.08.2010**
(21) Anmeldenummer: 07711441.1
(22) Anmeldetag: 03.02.2007
(51) Int. Cl.: B60R 9/04

(54) **VERFAHREN ZUR OBERFLÄCHENBEARBEITUNG VON DACHTRÄGERN FÜR KRAFTFAHRZEUGE SOWIE DACHTRÄGER FÜR KRAFTFAHRZEUGE**
METHOD FOR THE SURFACE TREATMENT OF ROOF RACKS FOR MOTOR VEHICLES AND ROOF RACKS FOR MOTOR VEHICLES
PROCEDE POUR TRAITER LA SURFACE DE GALERIES DE TOIT POUR VEHICULES AUTOMOBILES, ET GALERIES DE TOIT POUR VEHICULES AUTOMOBILES

(30) Priorität: 07.02.2006 DE 102006005541
(43) Veröffentlichungstag der Anmeldung: 29.10.2008
(73) Patentinhaber: Hans und Ottmar Binder GmbH Oberflächenveredelung, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2007/000932
(87) Internationale Veröffentlichungsnummer: WO 2007/090582

(56) Entgegenhaltungen:
- EP-A- 1 362 743

## Beschreibung

Die Erfindung betrifft ein Verfahren zur Oberflächenbearbeitung von aus Aluminium und/oder Aluminiumlegierung bestehenden Dachträgern für Kraftfahrzeuge und dergleichen.

Dachträger für Kraftfahrzeuge bestehen aus Aluminium oder Aluminiumlegierungen. Sie werden durch Strahlen, Bürsten und/oder Ätzen an ihrer Oberfläche bearbeitet, um einen "Edelstahfeffekt" zu erhalten. Der als Halbzeug fertige Dachträger wird demzufolge nach der formgebenden Bearbeitung (zum Beispiel Strangpressen, Biegen usw.) hinsichtlich seiner Oberfläche derart behandelt, dass diese matt erscheint. Alternativ ist es bekannt, den Dachträger nach der formgebenden Bearbeitung (Halbzeug) zu polieren, sodass seine Oberfläche glänzt. Je nach Wunsch stehen daher Dachgepäckträger mit einer glänzenden Oberfläche, wie im Dokument EP-A1-1362743 offenbart, oder mit einer matten Oberfläche zur Verfügung.

Der Erfindung liegt die Aufgabe zugrunde, ein Verfahren zur Oberflächenbearbeitung von Dachgepäckträgern anzugeben, das zu einer besonderen optischen Wirkung führt.

Diese Aufgabe wird erfindungsgemäß dadurch gelöst, dass die Oberfläche mindestens bereichsweise zunächst zur Erzielung eines Glanzes poliert wird und dass dann die polierte Oberfläche mindestens bereichsweise zur Erzielung eines seidenmatten Oberflächenabschnitts aufgeraut wird. Anders als im Stand der Technik erfolgt demzufolge zunächst eine Bearbeitung der Oberfläche derart, dass diese glänzt, also metallisch glänzend ausgebildet ist. Der Glanz kann durch unterschiedlichste Poliermethoden erzielt werden. Anschließend wird dann die polierte Oberfläche zumindest bereichsweise wieder aufgeraut, um einen Seidenmatteffekt zu erhalten. Sofern bestimmte Bereiche glänzend bleiben und andere Bereiche seidenmatt gestaltet werden, ergibt sich ein besonders wirkungsvolles Erscheinungsbild. Auch wirkt die seidenmatt strukturierte Oberfläche in besonderer Art und Weise, was darauf zurückzuführen ist, dass sie zunächst poliert und anschließend durch Aufrauen hergestellt wurde. Dieser erfindungsgemäß hergestellte Seidenmatteffekt weist eine besondere optische Wirkung auf, die nicht vergleichbar ist mit dem bisher üblichen Verfahren, nämlich eine noch nicht bearbeitete Oberfläche durch Aufrautechniken zu mattieren. Insbesondere die Anwendung der erfindungsgemäß am gleichen Bauteil erfolgenden beiden Oberflächenbearbeitungen in einem Folgeverbundprozess führt zu einer besonderen optischen Wirkung, vorzugsweise wenn sowohl glänzende als auch seidenmatte Oberflächenabschnitte am gleichen Bauteil, insbesondere aneinandergrenzend, vorliegen.

Es ist vorteilhaft, wenn das Aufrauen nur punktuell erfolgt. Mithin wird die glanzpolierte Oberfläche nicht vollflächig, sondern nur in kleinen Zonen, etwa punktuell, aufgeraut, wodurch sich ein besonderer Seidenmatteffekt einstellt.

Es ist vorteilhaft, wenn die Aufrauung durch Strahlen, Ätzen und/oder Bürsten erfolgt. Beim Strahlen kann beispielsweise Sandstrahlen eingesetzt werden.

Nach einer Weiterbildung der Erfindung erfolgt die Verwendung von mindestens einer Schablone derart, dass Oberflächenabschnitte durch Abdeckung mit der Schablone den Glanz behalten und andere Oberflächenabschnitte durch Nichtabdeckung und entsprechender Oberflächenbearbeitung aufgeraut werden. Die abdeckende Schablone schützt somit vor dem Aufrauen. Dort, wo die Schablone die polierte Oberfläche des Dachträgers freigibt, erfolgt ein Aufrauen. Hierdurch ergeben sich scharfkantig abgesetzte Übergänge zwischen Glanzabschnitten und Mattabschnitten, die zu einer besonderen Tiefenwirkung führen und eine starke Brillanz mit sich bringen, die bei einer normalen einstufig bearbeiteten Oberfläche gemäß des Standes der Technik nicht vorhanden ist. Die Erfindung zeichnet sich gerade durch die zweistufige Bearbeitung aus, nämlich erst den Glanz zu erzeugen, der dann zumindest bereichsweise durch Aufrauung in einen matten/seidenmatten Effekt überführt wird.

Insbesondere ist vorgesehen, dass nach dem Polieren und dem Aufrauen ein nunmehr vorliegender glänzender und/oder seidenmatter Oberflächenabschnitt eloxiert wird. Durch das abschließende Eloxierverfahren wird der optische Effekt der glänzenden Oberflächenabschnitte und seidenmatten Oberflächenabschnitte nicht zerstört, sondern überraschenderweise zumindest erhalten, wenn nicht gar noch verbessert.

Die Erfindung betrifft ferner einen Dachträger, insbesondere Dachleisten, aus Aluminium und/oder Aluminiumlegierung mit einer Oberfläche, die zumindest bereichsweise durch Polieren glänzend und zumindest durch nach dem Polieren erfolgte Aufrauung seidenmatt ausgebildet ist.

Zur Herstellung eines erfindungsgemäßen Dachträgers wird dieser zunächst als Halbzeug fertiggestellt, nämlich durch formgebende Bearbeitung, wie zum Beispiel Strangpressen, Biegen usw., hergestellt. Er besteht aus Aluminium und/oder Aluminiumlegierung. Anschließend werden dann zumindest die späteren Sichtbereiche auf Glanz poliert, das heißt, die entsprechende Oberfläche ist metallisch glänzend, quasi spiegelnd. Anschließend erfolgt dann eine Abdeckung von Oberflächenabschnitten. Diese Abdeckung wird mittels mindestens einer Schablone vorgenommen, die Öffnungen aufweist, wobei die glänzende Oberfläche des Dachgepäckträgers im Bereich der Öffnungen nicht abgedeckt wird und/oder die Schablone gewisse Bereiche der glänzenden Oberfläche des Dachgepäckträgers nicht abdeckt. Anschließend erfolgt eine Aufraubearbeitung derart, dass innerhalb der Öffnungen und/oder in den nicht abgedeckten Bereichen die polierte Oberfläche des Dachgepäckträgers zur Erzielung einer seidenmatten Oberfläche aufgeraut wird. Als Aufraubearbeitung kann insbesondere ein Strahlen, Ätzen und/oder Bürsten durchgeführt werden. Anschließend wird die Schablone entfernt und es stellt sich ein völlig neues, überraschendes Erscheinungsbild dar. Die nun erhaltene Oberfläche bekommt durch die nicht gänzlich zerstörten polierten Bereiche, sondern nur derart aufgerauten Bereiche, dass sie seidenmatt erscheinen, in Zusammenhang mit den noch glänzenden Bereichen eine besondere optische Wirkung, die sich in einer starken Brillanz und Tiefenwirkung der Glanz/Seidenmatt-Struktur darstellt. Auf diese Art und Weise lassen sich nicht nur beliebige Zonen erzeugen, sondern auch Beschriftungen, Muster usw. herstellen.

Aus dem Vorstehenden wird deutlich, dass bei der Erfindung eine Nutzung zweier Oberflächenbearbeitungen im Folgeverbundprozess auftritt, derart, dass zunächst die gesamte Oberfläche glänzend bearbeitet und anschließend dann bereichsweise aufgeraut wird. Die den Glanz behaltenden Oberflächenbereiche grenzen an die seidenmatten, also nicht gänzlich zerstörten, zuvor polierten Bereiche an und erzeugen einen besonderen optischen Effekt. Mittels Abdecktechnik, insbesondere Schablonentechnik, lassen sich Zeichen, Logos, Piktogramme, Zahlen usw. auf diese Weise anbringen, wobei zum Beispiel die Zahlen glänzend auf seidenmattem Untergrund in Erscheinung treten können oder aber auch umgekehrt, das heißt die Zahlen sind seidenmatt auf glänzender Oberfläche. Selbstverständlich ist eine derartige Strukturierung nicht auf die Ausbildung von Zahlen begrenzt, sondern es lassen sich beliebige Glanz/Seidenmattstrukturen erzeugen. Aufgrund der so gebildeten Oberflächenstruktur lassen sich auch Kennzeichnungen vornehmen, beispielsweise für eine Diebstahlerkennung, eine Chargenverfolgung, eine Codierung oder dergleichen, oder die erfindungsgemäße Vorgehensweise erfolgt rein aus optischen Gestaltungsgründen. Die Erfindung betrifft insbesondere Dachleisten, aus Aluminium oder Aluminiumlegierung, mit einer Oberfläche, die zumindest bereichsweise durch Polieren glänzend und zumindest durch nach dem Polieren bereichsweise erfolgte Aufrauung seidenmatt ausgebildet ist.

Nach Fertigstellung der glänzenden und seidenmatten Bereiche wird die so strukturierte Gesamtoberfläche eloxiert. Es ist auch möglich, den Eloxierschritt nicht durchzuführen.

## Patentansprüche

1. Verfahren zur Oberflächenbearbeitung von aus Aluminium und/oder Aluminiumlegierung bestehenden Dachträgern für Kraftfahrzeuge, wobei die Oberfläche mindestens bereichsweise zunächst zur Erzielung eines Glanzes poliert wird, **dadurch gekennzeichnet dass** dann die polierte Oberfläche mindestens bereichsweise zur Erzielung eines seidenmatten Oberflächenabschnitts aufgeraut wird.

2. Verfahren nach Anspruch 1, **dadurch gekennzeichnet, dass** das Aufrauen nur punktuell erfolgt.

3. Verfahren nach einem der vorhergehenden Ansprüche, **dadurch gekennzeichnet, dass** das Aufrauen durch Strahlen erfolgt.

4. Verfahren nach einem der vorhergehenden Ansprüche, **dadurch gekennzeichnet, dass** das Aufrauen durch Ätzen erfolgt.

5. Verfahren nach einem der vorhergehenden Ansprüche, **dadurch gekennzeichnet, dass** das Aufrauen durch Bürsten erfolgt.

6. Verfahren nach einem der vorhergehenden Ansprüche, **gekennzeichnet durch** die Verwendung von mindestens einer Abdeckung, insbesondere Schablone, derart, dass mindestens ein Oberflächenabschnitt **durch** Abdeckung den Glanz behält und mindestens ein anderer Oberflächenabschnitt **durch** Nichtabdeckung aufgrund der Oberflächenbearbeitung aufgeraut wird.

7. Verfahren nach einem der vorhergehenden Ansprüche, **dadurch gekennzeichnet, dass** der mindestens eine glänzende und/oder der mindestens eine seidenmatte Oberflächenabschnitt eloxiert wird.

8. Dachträger, insbesondere Dachleisten, aus Aluminium oder Aluminiumlegierung mit einer Oberfläche, die zumindest bereichsweise durch Polieren glänzend und durch nach dem Polieren zumindest bereichsweise erfolgte Aufrauung seidenmatt ausgebildet ist.

## Claims

1. Method for the surface treatment of roof racks for motor vehicles, the roof racks being composed of aluminum and/or aluminum alloy, wherein the surface is first polished at least in certain areas to a achieve a brilliant finish, **characterized in that** the polished surface is then abraded at least in certain areas to achieve a satin-finish surface section.

2. Method according to claim 1, **characterized in that** the abrasion is implemented only on a spot basis.

3. Method according to one of the foregoing claims, **characterized in that** the abrasion is implemented by blast-cleaning.

4. Method according to one of the foregoing claims, **characterized in that** the abrasion is implemented by etching.

5. Method according to one of the foregoing claims, **characterized in that** the abrasion is implemented by brushing.

6. Method according to one of the foregoing claims, **characterized by** the use of at least one cover, in particular, a template, whereby at least one surface section retains the brilliant finish as a result of the cover, while at least one other surface section is abraded by the surface treatment due to the lack of a cover.

7. Method according to one of the foregoing claims, **characterized in that** the at least one brilliant-finish and/or at least one satin-finish surface section is anodized.

8. Roof rack, in particular, roof moldings, composed of aluminum or aluminum alloy, having a surface that at least in certain areas has a brilliant finish as the result of polishing, and has a satin-finish due to abrasion implemented at least in certain areas after polishing.

## Revendications

1. Procédé pour le traitement de surface de galeries de toit composés d'aluminium et/ou d'alliage d'aluminium pour véhicules, dans lequel la surface est polie au moins par régions d'abord pour l'obtention d'un brillant, **caractérisé en ce que** la surface polie est ensuite rendue rugueuse au moins par régions pour l'obtention d'une section de surface satinée.

2. Procédé selon la revendication 1, **caractérisé en ce que** le traitement rugueux n'est effectué que ponctuellement.

3. Procédé selon l'une quelconque des revendications précédentes, **caractérisé en ce que** le traitement rugueux est effectué par rayonnement.

4. Procédé selon l'une quelconque des revendications précédentes, **caractérisé en ce que** le traitement rugueux est effectué par décapage.

5. Procédé selon l'une quelconque des revendications précédentes, **caractérisé en ce que** le traitement rugueux est effectué par brossage.

6. Procédé selon l'une quelconque des revendications précédentes, **caractérisé par** l'utilisation d'au moins un recouvrement, notamment d'un pochoir, de telle sorte qu'au moins une section de surface conserve le brillant par recouvrement et au moins une autre section de surface est rendue rugueuse par non recouvrement en raison du traitement de surface.

7. Procédé selon l'une quelconque des revendications précédentes, **caractérisé en ce que** l'au moins une section de surface brillante et/ou l'au moins une section de surface satinée est anodisée.

8. Galeries de toit, notamment baguettes de toit, en aluminium ou alliage d'aluminium avec une surface qui est réalisée de manière brillante au moins par régions par polissage et satinée par traitement rugueux effectué après le polissage au moins par régions.
